# EUROPÄISCHE PATENTANMELDUNG

(11) **EP 0 818 330 A2**
(43) Veröffentlichungstag der Anmeldung: **14.01.1998**
(21) Anmeldenummer: 97107889.4
(22) Anmeldetag: 14.05.1997
(51) Int. Cl.: B60C 5/00

(54) **Downhillschlauch**

(30) Priorität: 14.05.1996 DE 19619365
(71) Anmelder: Wanner, Michael, 88069 Tettnang (DE)
(72) Erfinder: Wanner, Michael, 88069 Tettnang (DE)
(74) Vertreter: Roth, Klaus

(57) **Zusammenfassung**

Die Erfindung geht von einem Reifen für ein Fahrzeug, insbesondere für ein Fahrrad, Motorrad oder dergleichen aus, der aus einer Felge (1) einen darauf aufgezogenen Mantel (2) mit oder ohne innenliegendem Schlauch (3) besteht. Aufgabe der Erfindung ist es, bei Eintreten einer Reifenpanne einen Notbetrieb bei luftleerem bzw. drucklosem Zustand des Reifens aufrechtzuerhalten. Zur Lösung der Aufgabe ist ein innenliegendes Stabilisierungsorgan/Organe (4, 5) vorgesehen, welches so ausgebildet ist, daß bei entweichender Druckluft eine begrenzte elastische Abstützung gegenüber dem Mantel (2) aufrecht erhalten bleibt.

## Beschreibung

Die Erfindung bezieht sich auf eine Einrichtung für die Bereifung eines Fahrzeuges, insbesondere eines Fahrrades, Mountainbikes, welches bevorzugt für den Downhill-Sport verwendet wird, wobei gemäß der Erfindung im Inneren des Reifens ein Stützorgan 4 untergebracht ist, welches bei Reifenpanne und erfolgtem Luftaustritt eine begrenzte elastische Aufrechterhaltung des Reifenquerschnittes sicherstellt, um einen Notbetrieb zu gewährleisten.

Beim bekannten Fahrradreifen ist nach einer Reifenpanne und erfolgtem Luftaustritt jeglicher Fahrbetrieb ausgeschlossen. Darüber hinaus besteht die Gefahr des Durchschlagens und weiterer Beschädigung von Reifen und Felge.Aufgabe der Erfindung ist es, bei Eintreten einer Reifenpanne einen Notbetrieb bei luftleerem bzw. drucklosem Zustand aufrecht zu erhalten.

Diese Aufgabe wird durch die im Anspruch 1 aufgeführten Merkmale gelöst. Weitere vorteilhafte Ausgestaltungen gehen aus den Unteransprüchen und der Beschreibung hervor. Die Erfindung wird anhand der Zeichnung erläutert.
- Figur 1: Reifen mit Stützelement druckluftgefüllt;
- Figur 2: Reifen mit Stützelement ohne Druckluftfüllung.

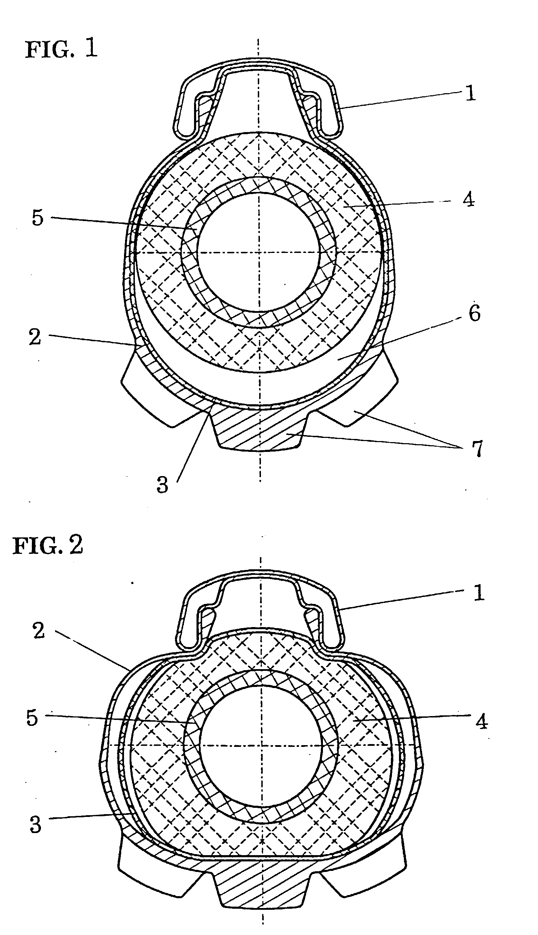

Gemäß der Erfindung ist, wie in der Zeichnung Figur 1 darstellt, auf der Radfelge 1 in bekannter Art der Mantel 2 und der innenliegende Schlauch 3 aufgezogen, der im aufgepumpten Zustand mit Druckluft 6 gefüllt ist. Erfindungsgemäß befindet sich im Inneren des Schlauches 3 ein entsprechend ausgebildetes Stützorgan 4;5. Bei Entweichen der Druckluft 6, z.B. durch eine Reifenpanne wird, wie in Figur 2 dargestellt, dem Mantel 2 durch das Stützorgan 4, 5 ein begrenzter elastischer Widerstand entgegengesetzt, der so groß ist, daß zumindest ein Notbetrieb aufrecht erhalten bleibt und Durchschlaggefahr für den Reifen, den Schlauch an die Felge ausgeschlossen ist.

Dies Stabilisierungselemente 4, 5 sind verschiedenartig ausführbar. Bevorzugt kann hierfür ein ansich bekannter Schaumstoffschlauch, wie z.B. aus der Bau-Industrie bekannt, verwendet werden. Zur Erzielung besonderer Stabilität sieht die Erfindung im Inneren dieses Schaumstoff-Schlauches 4 einen zusätzlichen umlaufenden Stabilisierungsring oder -schlauch 5 vor, z.B. in Form eines Kunststoffrohres, wie ebenfalls in der Bau-Industrie oder in der Elektro-Installation, z.B. als Leerrohr, bekannt. Beide Elemente Stützring 4 und Stabilisierungsring 5 können bei Serienfertigung sehr kostengünstig hergestellt werden. Das Material der Stützelemente 4 und 5 ist aus sehr leichtem Material. Die Montage ist weitgehend mit üblichen Werkzeugen durchführbar.

Die Erfindung ist auch für schlauchlose Reifen anwendbar.

Die Versuche haben die Funktionsfähigkeit und die genannten Vorteile bestätigt. Die Walkarbeit ist vernachlässigbar gering.

Die Erfindung ist für jede Art von luftbereiften Fahrzeugen, Fahrräder, Motorräder und Kraftfahrzeuge verschiedener Art anwendbar und bietet neben den genannten Vorteilen hohen Sicherheitseffekt bei jeder Art von Reifenpannen.

Bezugszeichen:
- 1: Felge
- 2: Mantel
- 3: Schlauch
- 4: Stützring
- 5: Stabilisierungsring
- 6: Druckluft
- 7: Profil

## Patentansprüche

1. Reifen mit Stabilisierungseinrichtung für ein Fahrzeug, insbesondere für ein Fahrrad, Motorrad oder andere, bestehend aus einer Felge (1), einem darauf aufgezogenen Mantel (2), mit oder ohne innenliegendem Schlauch (3) mit Druckluft (6) **dadurch gekennzeichnet,** daß ein innenliegendes Stabilisierungsorgan /-organe(Stützring 4, Stabilisierungsring 5) vorgesehen ist, welches so ausgebildet ist, daß bei Entweichen der Druckluft (6) eine begrenzte elastische Abstützung gegenüber dem Mantel (2) aufrecht erhalten bleibt.

2. Reifen mit Stabilisierungseinrichtung **dadurch gekennzeichnet,** daß das Stabilisierungsorgan (Stützring 4) aus Elastomer besteht.

3. Reifen mit Stabilisierungseinrichtung nach Anspruch 1 und 2 **dadurch gekennzeichnet ,** daß das Stabilisierungsorgan /-organe aus einem Stützring (4) und einem weiteren innenliegenden Stabilisierungsring (5) besteht, wobei der Stabilisierungsring (5) bevorzugt als Kunststoff-Rohr ausgebildet ist.

4. Reifen mit Stabilisierungseinrichtung nach Anspruch 1 bis 3 **dadurch gekennzeichnet,** daß das Stabilisierungsorgan (4,5) einen Teil des Innenraumes oder den vollen Innenraum des Reifens ausfüllt.

5. Reifen mit Stabilisierungseinrichtung nach Anspruch 1 bis 4 **dadurch gekennzeichnet,** daß die Bereifung mit oder ohne Schlauch (schlauchloser Reifen) ausgebildet ist.

6. Reifen mit Stabilisierungseinrichtung nach Anspruch 1 bis 5 **dadurch gekennzeichnet,** daß die Bereifung mit oder ohne Druckluftfüllung realisiert wird, wobei die Stabilisierungselemente (4, 5) so ausgebildet sind, daß Dauerbetrieb ohne Druckluft möglich ist.
